# DEMANDE DE BREVET EUROPEEN

(11) **EP 1 508 998 A1**
(43) Date de publication de la demande: **23.02.2005**
(21) Numéro de dépôt: 04292031.4
(22) Date de dépôt: 11.08.2004
(51) Int. Cl.: H04L 12/24

(54) **Procédé et dispositif de génération de rôles pour des éléments d'un réseau de communications, à partir de modèles de rôles**

(30) Priorité: 19.08.2003 FR 0310000
(71) Demandeur: ALCATEL, 75008 Paris (FR)
(72) Inventeur: Abdelkrim, Hanine, 75018 Paris (FR)
(74) Mandataire: Chaffraix, Sylvain

(57) **Abrégé**

Un dispositif (D) est dédié à la génération de rôles pour des éléments (NEL) ou équipements (NEQ) d'un réseau de communications, capables d'effectuer des traitements de trafic définis par des règles de politique stockées dans une première mémoire (M1) en correspondance de définitions de rôles. Le dispositif (D) comprend des moyens de traitement (MT) chargés, lorsqu'ils reçoivent une demande de création d'un rôle, d'associer ce rôle à l'identifiant d'un modèle de rôle choisi parmi des modèles de rôle, stockés dans une seconde mémoire (M2) et comprenant chacun un ensemble d'au moins une contrainte liée à une fonction assurée par un type d'élément de réseau géré (NEL), et de définir le rôle par un ensemble d'au moins un élément de réseau géré satisfaisant à l'une au moins des contraintes du modèle de rôle associé, chaque contrainte devant en outre être remplie par l'un au moins des éléments de réseau (NEL) de l'ensemble.

## Description

L'invention concerne le domaine de la gestion des équipements et éléments d'équipements d'un réseau de communications disposant d'un système de gestion de réseau dit « à règles de politique ».

Dans les réseaux de communications précités, les équipements et/ou éléments de réseau, ou plus généralement les ressources, sont gérés en fonction d'une politique (ou « policy ») définie par des règles de politique (ou « policy rules »). Une règle de politique est une règle de type « si <condition> alors <action> ».

Les règles de politique définissent des traitements de trafic, généralement associés à des services, que doivent effectuer les éléments ou équipements de réseau lorsqu'ils les ont instaurées.

On entend ici par « équipement de réseau» tout type de matériel, comme par exemple des serveurs, des terminaux, des commutateurs, des routeurs ou des concentrateurs, capable d'échanger des données, notamment de gestion, selon un protocole de gestion de réseau avec le système de gestion de réseau (ou NMS pour « Network Management System ») de son réseau d'appartenance. Le protocole de gestion de réseau peut être par exemple le protocole SNMP (pour « Simple Network Management Protocol » RFC 2571-2580) utilisé notamment dans les réseaux de type IP ou ADSL, le protocole TL1 utilisé notamment dans les réseaux de type SONET, le protocole Q3 utilisé notamment dans les réseaux de type SDH, ou encore les protocoles CLI (ligne de commande) et CORBA.

Par ailleurs, on entend par « élément de réseau » tout composant d'un équipement de réseau capable d'assurer un traitement de trafic, comme par exemple une carte, une interface, un étage (ou « shelf »), ou un tiroir (ou « rack »).

De plus, on entend par « trafic » aussi bien un flux de paquets de données qu'un simple paquet de données.

Dans certains des réseaux précités, les règles de politiques sont associées à des rôles qui définissent les parties du réseau concernées par des jeux de règles de politique. En d'autres termes, un rôle est constitué d'un ensemble d'éléments et/ou d'équipements gérés.

Cette notion de rôle est par exemple définie dans le document RFC 3060 issu de l'IETF (*Internet Engineering Task Force*) et intitulé PCIM (*Policy Core Information Madel*) datant de février 2001. Cette notion de rôle a été reprise par exemple dans les solutions exposées dans les brevets américains US 5872928 et US 6587876.

Chronologiquement, l'opérateur (ou le superviseur) d'un réseau commence par assigner les rôles aux ressources afin de faciliter la satisfaction des accords de niveau de service (ou SLAs pour « Service Level Agreements ») passés avec le(s) client(s) concerné(s). Puis, il élabore une ou plusieurs règles de politique qu'il associe à un ou plusieurs rôles, à l'aide d'un gestionnaire de politique (ou « policy manager ») faisant partie du système de gestion du réseau (ou NMS « Network Management System »). Les règles de politique sont ensuite transmises à un serveur de politique (ou « policy server ») chargé de les valider, de les stocker et de les transmettre sélectivement (en utilisant les rôles) aux équipements concernés afin qu'ils les instaurent, généralement par l'intermédiaire de modules de gestion d'élément (ou « element manager »).

En raison du mode de génération des rôles, des erreurs peuvent survenir. Généralement, l'erreur porte sur l'incompatibilité d'un élément ou d'un équipement avec des règles de politique associées au rôle qui leur a été assigné. Par exemple, dans un réseau à protocole internet (IP) l'interface d'un routeur supporte des traitements simples de paquets IP, mais ne supporte pas des traitements de type BGP/MPLS VPN qui lui ont pourtant été assignés par des règles de politique.

L'invention a donc pour but d'éviter que de telles erreurs de définition de rôles se produisent lors de leur génération.

Elle propose à cet effet un procédé dédié à la génération de rôles pour des éléments (ou équipements) gérés d'un réseau de communications, capables d'effectuer des traitements de trafic, par exemple associés à des services offerts par le réseau, et définis par des règles de politique associées à des définitions de rôle.

Ce procédé se caractérise par le fait qu'il consiste, chaque fois qu'un rôle doit être créé, à associer ce rôle à l'identifiant d'un modèle de rôle choisi parmi des modèles de rôle comprenant chacun un ensemble d'au moins une contrainte liée à une fonction assurée par un type d'élément de réseau géré, puis à définir le rôle par un ensemble d'au moins un élément de réseau géré qui satisfait à l'une au moins des contraintes du modèle de rôle associé, chaque contrainte devant en outre être satisfaite par l'un au moins des éléments de réseau de l'ensemble.

Lorsque l'ensemble de contraintes ne comprend qu'une seule contrainte, chaque élément du rôle doit remplir cette contrainte. En revanche, lorsque l'ensemble de contraintes comprend plusieurs contraintes, chaque élément du rôle doit remplir une ou plusieurs contraintes, voire même toutes, selon ce qui est défini et selon les modalités définies dans le modèle de rôle.

L'invention propose également un dispositif dédié à la génération de rôles pour des éléments (ou équipements) d'un réseau de communications, capables d'effectuer des traitements de trafic, par exemple associés à des services offerts par le réseau, et définis par des règles de politique stockées dans une première mémoire en correspondance de définitions de rôle.

Ce dispositif se caractérise par le fait qu'il comprend des moyens de traitement chargés, lorsqu'ils reçoivent une demande de création d'un rôle, d'associer ce rôle à l'identifiant d'un modèle de rôle choisi parmi des modèles de rôle, stockés dans une seconde mémoire et comprenant chacun un ensemble d'au moins une contrainte liée à une fonction assurée par un type d'élément de réseau géré, et de définir le rôle par un ensemble d'au moins un élément de réseau géré satisfaisant à l'une au moins des contraintes du modèle de rôle associé, chaque contrainte devant en outre être satisfaite par l'un au moins des éléments de réseau de l'ensemble.

Préférentiellement, les moyens de traitement sont capables de stocker dans la première mémoire les définitions des rôles créés en correspondance des règles de politique et de l'identifiant du modèle de rôle associés.

Par ailleurs, le dispositif selon l'invention peut comprendre la première mémoire et/ou la seconde mémoire.

Qu'il s'agisse du procédé ou du dispositif selon l'invention, les contraintes désignent préférentiellement une fonction assurée par un type d'élément de réseau géré compte tenu de l'une au moins de ses capacités et/ou un ou plusieurs modèles de rôle.

L'invention propose également un gestionnaire de politique (ou « policy manager »), pour un système de gestion de réseau (NMS), équipé d'un dispositif du type de celui présenté ci-avant.

L'invention est particulièrement bien adaptée, bien que de façon non exclusive, aux réseaux de communications tels que les réseaux de transmission (par exemple de type WDM, SONET, SDH), les réseaux de données (par exemple de type Internet-IP ou ATM), les réseaux de voix (par exemple de type classique ou mobile) ou les réseaux mixtes voix-données (par exemple de type NGN).

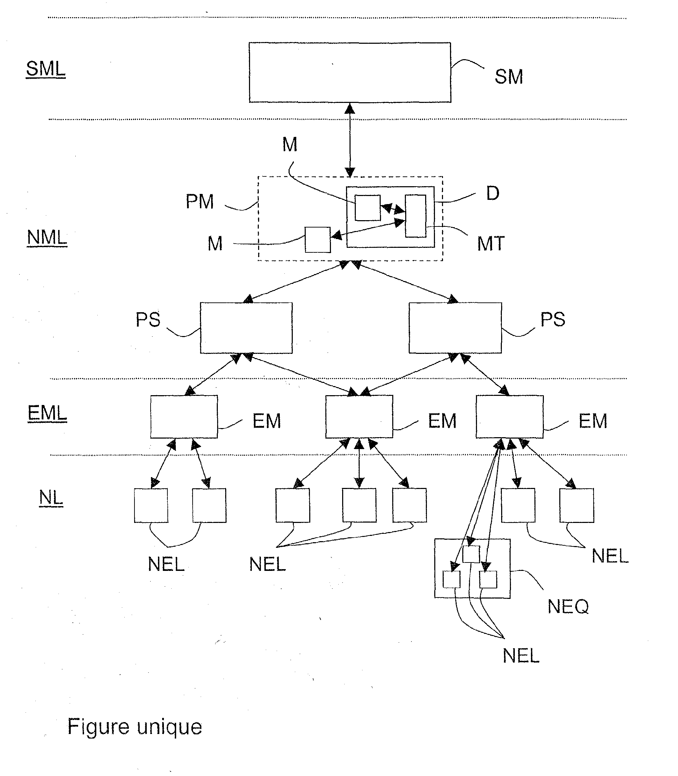

D'autres caractéristiques et avantages de l'invention apparaîtront à l'examen de la description détaillée ci-après, et du dessin annexé sur lequel l'unique figure illustre de façon schématique un exemple de réalisation d'un réseau de communications équipé d'un dispositif de génération de rôles selon l'invention. Le dessin annexé pourra non seulement servir à compléter l'invention, mais aussi contribuer à sa définition, le cas échéant.

L'invention a pour objet de permettre la génération de rôles pour des équipements et éléments d'un réseau de communications, gérés par des règles de politique.

On considère dans ce qui suit, à titre d'exemple illustratif, que le réseau de communications est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique ou mobile, ou encore aux réseaux mixtes voix-données tels que les réseaux de type NGN.

Comme cela est illustré sur l'unique figure, un réseau de communications de type géré peut être schématiquement décomposé en quatre couches : une première couche appelée couche de gestion de services SML (pour « Service Management Layer »), une deuxième couche couplée à la couche SML et appelée couche de gestion de réseau NML (pour « Network Management Layer »), une troisième couche couplée à la couche NML et appelée couche de gestion d'éléments EML (pour « Element Management Layer »), et une quatrième couche couplée à la couche EML et appelée couche réseau NL (pour « Network Layer »).

Les première SML, deuxième NML et troisième EML couches définissent au moins en partie le système de gestion du réseau (ou NMS pour « Network Management System ») qui est destiné à permettre au gestionnaire (ou superviseur) du réseau de gérer et contrôler à distance les équipements NEQ auxquels il est couplé.

La quatrième couche NL comprend une multiplicité d'éléments de réseau NEL qui constituent, lorsqu'ils sont seuls comme lorsqu'ils sont regroupés, des équipements de réseau NEQ reliés les uns aux autres par des moyens de communications. En d'autres termes, un équipement de réseau NEQ est un matériel constitué d'au moins un élément de réseau NEL.

Chaque équipement de réseau NEQ est capable d'échanger des données de gestion avec le système de gestion NMS, selon un protocole de gestion choisi, comme par exemple le protocole SNMP (pour « Simple Network Management Protocol » RFC 2571-2580), ou les protocoles TL1, CORSA, CLI ou Q3. Un équipement de réseau NEQ est par exemple un serveur périphérique ou de coeur, un terminal, un commutateur, un routeur ou un concentrateur.

Par ailleurs, on entend ici par « élément de réseau NEL » tout composant d'un équipement de réseau NEQ capable d'assurer au moins un traitement de trafic, comme par exemple une carte, une interface, un étage (ou « shelf »), ou un tiroir (ou « rack »). Un tel élément de réseau NEL peut donc être défini par une ou plusieurs capacités qui définissent son aptitude à assurer une fonction au sein du réseau, comme par exemple conditionner des paquets de données, ou convertir des adresses de réseau, ou encore assurer un traitement de type BGP/MPLS VPN SAP (Service Access Point).

La première couche SML est constituée d'un gestionnaire de service SM traduisant en règles de politique (ou « policy rules ») des accords de niveau de service (ou SLAs pour « Service Level Agreements ») passés entre l'opérateur du réseau et ses clients.

Ces règles de politique définissent par groupe des politiques élaborées par l'opérateur de manière à satisfaire les accords de niveau de service (SLA). Elles sont destinées à définir les traitements de trafic (ou fonctions) que les différents équipements de réseau NEQ et leurs éléments de réseau NEL doivent effectuer (ou assurer) afin de mettre en oeuvre les services offerts par le réseau, comme par exemple un service de type réseau virtuel privé (ou IP VPN).

La deuxième couche NML est constituée d'un gestionnaire de politique PM (pour « Policy Manager »), alimenté en règles de politique par le gestionnaire de service SM, et d'un ou plusieurs serveurs de politique PS (ou « Policy Server ») couplé(s) au gestionnaire de politique PM.

Le gestionnaire de politique PM permet principalement à l'administrateur du réseau, ou à son opérateur, d'associer des rôles à des règles de politique.

Chaque serveur de politique PS est chargé de valider les règles de politique qu'il reçoit du gestionnaire de politique PM, de les stocker dans une mémoire et de les transmettre sélectivement à la troisième couche EML.

La seconde couche EML est constituée d'un ou plusieurs modules de gestion d'équipements EM (ou « Element Management ») chargés d'assurer l'interface de dialogue entre le système de gestion NMS, et notamment ses première SML et seconde NML couches, et les équipements NEQ (ou éléments NEL) du réseau auxquels ils sont respectivement couplés. Par exemple, chaque module de gestion d'éléments EMS est implanté dans un serveur de gestion. Mais, il pourrait être également implanté dans un équipement de réseau NEQ (on parle d'agent embarqué), accédé par un terminal dédié à la gestion locale d'équipement(s), également appelé « craft terminal ».

Comme indiqué précédemment, l'invention a pour but de permettre la génération de rôles pour des éléments NEL (ou équipements NEQ) gérés d'un réseau de communications. Elle propose à cet effet un dispositif de génération de rôles D comprenant un module de traitement MT chargé, chaque fois qu'il reçoit une demande de création d'un rôle, d'associer ledit rôle à l'identifiant d'un modèle de rôle.

Ce modèle de rôle est choisi, par l'opérateur ou l'administrateur du réseau de gestion, parmi des modèles de rôle comprenant chacun un ensemble d'au moins une contrainte liée à une fonction assurée par un type d'élément NEL (ou d'équipement NEQ) géré du réseau. En d'autres termes, un modèle de rôle est constitué d'un ensemble de contraintes relatives à certains éléments et équipements du réseau.

Une contrainte se présente sous la forme d'un rôle de base (ou fonction) et/ou d'un ou plusieurs modèles de rôle (il peut en effet constituer une concaténation de modèles).

Un rôle de base est une fonction assurée par un type d'élément de réseau géré NEL, compte tenu de l'une au moins de ses capacités réelles (dans la définition donnée précédemment). Il peut être également défini comme un mode d'utilisation d'au moins une capacité réelle d'un élément de réseau géré NEL.

Le rôle de base d'un élément géré NEL est choisi en fonction de la façon dont l'une de ses (ou sa) capacité(s) peut être utilisée pour mettre en oeuvre tout ou partie d'un service, du point de vue de l'opérateur du réseau. A titre d'exemple non limitatif, dans le cas de la mise en place d'un service de type IP VPN, une interface présentant une capacité de traitement de type BGP/MPLS VPN, peut être utilisée en tant que point d'accès de service (ou SAP pour « Service Access Point ») pour assurer des traitements BGP/MPLS VPN. Dans ce cas, l'opérateur peut définir le rôle de base « BGP/MPLS VPN SAP » et l'associer à l'interface (ou au type d'interface) précité.

Il est important de noter que, dans la mesure où un équipement géré NEQ peut disposer de plusieurs capacités, plusieurs rôles de base peuvent lui être associés. Par ailleurs, une même capacité pouvant être possédée par plusieurs éléments NEL (ou équipements NEQ) gérés, un même rôle de base peut être associé à plusieurs éléments NEL (ou équipements NEQ) gérés (d'où la notion de type d'élément).

Grâce à cette définition, un modèle de rôle appelé « VPN », associé à un service de type IP VPN, peut ainsi être constitué d'un ensemble de rôles de base du type « BGP/MPLS VPN SAP » précité.

Une fois créés les modèles de rôle sont stockés par le module de traitement MT dans une mémoire M2 à laquelle il est couplé et qui fait préférentiellement partie du dispositif D selon l'invention.

Le dispositif D est préférentiellement intégré dans le gestionnaire de politique PM du réseau qui associe les règles de politique à des rôles en fonction des informations qui lui sont transmises via une interface graphique (non représentée), de type GUI (« Graphical User Interface »), du système de gestion NMS.

Le dispositif D peut ainsi recevoir de l'interface graphique GUI les demandes de création de rôles formées par l'opérateur, les satisfaire puis communiquer la définition de chaque nouveau rôle créé au module de génération de règles du gestionnaire de politique PM afin qu'il génère la ou les règles de politique associées. De plus, le module de traitement MT peut recevoir de l'interface graphique GUI les définitions des rôles de base et des modèles de rôle qui sont par exemple conçues par un administrateur de gestion du réseau.

Selon l'invention, lorsque le module de traitement MT a associé un rôle à l'identifiant d'un modèle de rôle, il définit ensuite le rôle. Cela consiste à regrouper au sein d'un ensemble un ou plusieurs éléments (ou équipements) de réseau gérés qui satisfont chacun à l'une au moins des contraintes du modèle de rôle associé, et chaque contrainte devant en outre être remplie par l'un au moins des éléments de réseau NEL de l'ensemble. Selon ce qui a été défini dans le modèle de rôle, chaque élément d'un ensemble doit satisfaire une ou plusieurs contraintes, voire même toutes. De plus, chaque élément d'un ensemble doit satisfaire à la ou les contraintes selon les modalités définies dans ledit modèle de rôle.

Par exemple, le module de traitement MT a associé le modèle de rôle « VPN » à un rôle « VPN-A », si bien que chaque élément NEL de l'ensemble constituant le rôle VPN-A remplit l'un au moins des rôles de base (il peut éventuellement n'y en avoir qu'un seul) regroupés au sein du modèle de rôle VPN.

L'opérateur choisit ensuite, à l'aide du gestionnaire de politique PM, les règles de politique qui doivent être associées au rôle qui vient d'être créé. Puis, on stocke dans une mémoire M1 la définition du rôle créé en correspondance des règles de politique associées et de l'identifiant du modèle de rôle associé.

C'est préférentiellement le module de traitement MT du dispositif D qui se charge de cette mémorisation.

La mémoire M1 fait partie de la deuxième couche NML afin d'être accessible au gestionnaire de politique PM et au(x) serveur(s) de politique PS, ainsi qu'éventuellement à la troisième couche EML. Par exemple, cette mémoire M1 est intégrée dans le gestionnaire de politique PM, éventuellement dans le dispositif D.

Une fois que des règles de politique ont été associées à une définition de rôle, elles peuvent être transmises sur requête à chaque serveur de politique PS concerné afin qu'il les transmettent à destination des éléments NEL et/ou équipements NEQ désignés par le rôle associé et qui devront les mettre en oeuvre.

La transmission des règles de politique aux éléments et/ou équipements concernés peut éventuellement s'effectuer selon un modèle en couches adapté à l'exemple de réseau illustré sur l'unique figure.

Pour ce faire, on définit les relations qui existent entre les différentes couches, afin qu'une couche n dispose d'informations indiquant quels éléments NEL et/ou équipements NEQ sont gérés par la couche n+1 placée juste en-dessous d'elle. Ainsi, lorsque la couche n reçoit de la couche n-1 des règles de politique associées à un rôle, elle n'a qu'à déterminer, à l'aide de la définition du rôle, la ou les portions de la couche n+1 auxquelles elle doit elle-même les transmettre.

Le dispositif de génération D selon l'invention, et notamment son module de traitement MT ainsi qu'éventuellement sa mémoire M2 et/ou la mémoire M1, peuvent être réalisés sous la forme de circuits électroniques, de modules logiciels (ou informatiques), ou d'une combinaison de circuits et de logiciels.

L'invention offre également un procédé dédié à la génération de rôles pour des éléments NEL (ou équipements NEQ) gérés d'un réseau de communications, capables d'effectuer des traitements de trafic; par exemple associés à des services offerts par le réseau, et définis par des règles de politique associées à des définitions de rôle.

Celui-ci peut être notamment mis en oeuvre à l'aide du dispositif de génération de rôles D et du gestionnaire de politique PM présentés ci-avant. Les fonctions et sous-fonctions principales et optionnelles assurées par les étapes de ce procédé étant sensiblement identiques à celles assurées par les différents moyens constituant le dispositif de génération de rôles D et/ou le gestionnaire de politique PM, seules seront résumées ci-après les étapes mettant en oeuvre les fonctions principales du procédé selon l'invention.

Ce procédé consiste, chaque fois qu'un rôle doit être créé, à associer ce rôle à l'identifiant d'un modèle de rôle choisi parmi des modèles de rôle comprenant chacun un ensemble d'au moins une contrainte liée à une fonction assurée par un type d'élément de réseau géré NEL, puis à définir le rôle par un ensemble d'au moins un élément de réseau géré NEL qui satisfait à l'une au moins des contraintes du modèle de rôle associé, chaque contrainte devant en outre être satisfaite par l'un au moins des éléments de réseau de l'ensemble.

L'invention ne se limite pas aux modes de réalisation de dispositif de génération de rôles, de gestionnaire de politique et de procédé de génération de rôles décrits ci-avant, seulement à titre d'exemple, mais elle englobe toutes les variantes que pourra envisager l'homme de l'art dans le cadre des revendications ci-après.

## Revendications

1. Procédé de génération de rôles pour des éléments gérés (NEL) d'un réseau de communications agencés pour effectuer des traitements de trafic définis par des règles de politique associées à des définitions de rôle, **caractérisé en ce qu'**il consiste, en cas de demande de création d'un rôle, à associer ledit rôle à un identifiant d'un modèle d'un rôle choisi parmi des modèles de rôle comprenant chacun un ensemble d'au moins une contrainte liée à une fonction assurée par un type d'élément de réseau géré, puis à définir ledit rôle par un ensemble d'au moins un élément de réseau géré (NEL) satisfaisant à l'une au moins desdites contraintes du modèle de rôle associé, chaque contrainte devant en outre être satisfaite par l'un au moins des éléments de réseau (NEL) de l'ensemble.

2. Procédé selon la revendication 1, **caractérisé en ce que** certaines contraintes désignent une fonction assurée par un type d'élément de réseau géré (NEL) compte tenu de l'une au moins de ses capacités.

3. Procédé selon l'une des revendications 1 et 2, **caractérisé en ce que** certaines contraintes d'un modèle de rôle désignent au moins un modèle de rôle.

4. Procédé selon l'une des revendications 1 à 3, **caractérisé en ce que** lesdits traitements de trafic sont associés à des services offerts par ledit réseau.

5. Dispositif de génération de rôles (D), pour des éléments gérés (NEL) d'un réseau de communications agencés pour effectuer des traitements de trafic définis par des règles de politique stockées dans une première mémoire (M1) en correspondance de définitions de rôle, **caractérisé en ce qu'**il comprend des moyens de traitement (MT) propres, à réception d'une demande de création d'un rôle, à associer ledit rôle à un identifiant d'un modèle de rôle choisi parmi des modèles de rôle stockés dans une seconde mémoire (M2) et comprenant chacun un ensemble d'au moins une contrainte liée à une fonction assurée par un type d'élément de réseau géré (NEL), et à définir ledit rôle par un ensemble d'au moins un élément de réseau géré (NEL) satisfaisant à l'une au moins desdites contraintes du modèle de rôle associé, chaque contrainte devant en outre être satisfaite par l'un au moins des éléments de réseau (NEL) de l'ensemble.

6. Dispositif selon la revendication 5, **caractérisé en ce que** lesdits moyens de traitement (MT) sont agencés pour stocker la définition d'un rôle créé dans ladite première mémoire (M1) en correspondance de règles de politique associées et de l'identifiant du modèle de rôle associé.

7. Dispositif selon l'une des revendications 5 et 6, **caractérisé en ce qu'**il comprend ladite seconde mémoire (M2).

8. Dispositif selon l'une des revendications 5 à 7, **caractérisé en ce qu'**il comprend ladite première mémoire (M1).

9. Dispositif selon l'une des revendications 5 à 8, **caractérisé en ce que** certaines contraintes désignent une fonction assurée par un type d'élément de réseau géré (NEL) compte tenu de l'une au moins de ses capacités.

10. Dispositif selon l'une des revendications 5 à 9, **caractérisé en ce que** certaines contraintes d'un modèle de rôle désignent au moins un modèle de rôle.

11. Dispositif selon l'une des revendications 5 à 10, **caractérisé en ce que** les traitements de trafic sont associés à des services offerts par ledit réseau.

12. Gestionnaire de politique (PM) d'un système de gestion de réseau d'un réseau de communications comprenant une multiplicité d'éléments de réseau gérés (NEL) agencés pour effectuer des traitements de trafic définis par des règles de politique associées à des définitions de rôle, **caractérisé en ce qu'**il comprend un dispositif (D) selon l'une des revendications 5 à 11.

13. Utilisation du dispositif (D), du gestionnaire de politique (PM) et du procédé selon l'une des revendications précédentes dans les réseaux de transmission, en particulier de type WDM, SONET et SDH, les réseaux de données, en particulier de type Internet-IP et ATM, les réseaux de voix, en particulier de type classique ou mobile, et les réseaux mixtes voix-données, en particulier de type NGN.
